(19) Europäisches Patentamt
European Patent Office
Office européen des brevets

(11) **EP 4 582 332 A1**

(12) **EUROPEAN PATENT APPLICATION**
published in accordance with Art. 153(4) EPC

(43) Date of publication:
**09.07.2025 Bulletin 2025/28**

(21) Application number: **22957387.8**

(22) Date of filing: **31.08.2022**

(51) International Patent Classification (IPC):
**B62D 6/00** (2006.01)    **B62D 5/04** (2006.01)
**G05B 11/32** (2006.01)    **G05B 11/36** (2006.01)
**H02P 27/08** (2006.01)

(52) Cooperative Patent Classification (CPC):
**B62D 6/008; H02P 23/14; H02P 25/03;**
**B62D 5/0463; G05B 13/024**

(86) International application number:
**PCT/JP2022/032754**

(87) International publication number:
**WO 2024/047788 (07.03.2024 Gazette 2024/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **JTEKT Corporation
Kariya-shi, Aichi 448-8652 (JP)**

(72) Inventors:
• **INDEN Yuki
Kariya-shi, Aichi 448-8652 (JP)**
• **TAMAIZUMI Terutaka
Kariya-shi, Aichi 448-8652 (JP)**

(74) Representative: **Winter, Brandl - Partnerschaft
mbB
Alois-Steinecker-Straße 22
85354 Freising (DE)**

(54) **STEERING CONTROL DEVICE AND STEERING CONTROL METHOD**

(57)    A steering control device (10) performs a manipulated variable calculation process, an estimation process, a correction process, and an operation process. The manipulated variable calculation process is a process of calculating a manipulated variable of control that uses steering torque as a controlled variable and desired steering torque as a desired value of the controlled variable. The estimation process is a process of estimating disturbance torque using a nominal model and a filter. The correction process is a process of correcting the manipulated variable according to the disturbance torque estimated by the estimation process. The operation process is a process of operating a motor of the steering system to generate torque according to the manipulated variable corrected by the correction process. A polynomial in a denominator of a transfer function of the filter has a higher degree than a polynomial in a denominator of a transfer function of the nominal model.

Fig.1

**Description**

TECHNICAL FIELD

The present disclosure relates to steering control devices and steering control methods.

BACKGROUND ART

For example, Patent Document 1 below describes a device that operates a motor for steering steered wheels according to a manipulated variable of feedback control that uses steering torque as a controlled variable and uses a desired value of the steering torque as a desired value of the controlled variable. Specifically, the manipulated variable of the feedback control is calculated according to an output value of a proportional element, an output value of a derivative element, and an output value of an integral element.

Related Art Documents

Patent Documents

Patent Document 1: Japanese Unexamined Patent Application Publication No. 2004-203089 (JP 2004-203089 A)

SUMMARY OF THE INVENTION

Problem to be Solved by the Invention

When setting a feedback gain etc. in order to satisfy required elements such as improving response of the feedback control, the workload required to adapt the values of parameters of the feedback control to those required elements may become excessively large.

Means for Solving the Problem

One aspect of the present disclosure provides a steering control device. The steering control device is configured to perform a manipulated variable calculation process, an estimation process, a correction process, and an operation process. The manipulated variable calculation process is a process of calculating a manipulated variable of control that uses steering torque as a controlled variable and uses desired steering torque as a desired value of the controlled variable. The steering torque is torque that a driver inputs to a steering system. The desired steering torque is a desired value of the steering torque. The estimation process is a process of estimating disturbance torque using a nominal model and a filter. The correction process is a process of correcting the manipulated variable according to the disturbance torque estimated by the estimation process. The operation process is a process of operating a motor of the steering system so as to generate torque according to the manipulated variable corrected by the correction process. A degree of a polynomial in a denominator of a transfer function of the filter is higher than a degree of a polynomial in a denominator of a transfer function of the nominal model.

Another aspect of the present disclosure provides a steering control method. The steering control method includes a step of performing a manipulated variable calculation process, an estimation process, a correction process, and an operation process. The manipulated variable calculation process is a process of calculating a manipulated variable of control that uses steering torque as a controlled variable and uses desired steering torque as a desired value of the controlled variable. The steering torque is torque that a driver inputs to a steering system. The desired steering torque is a desired value of the steering torque. The estimation process is a process of estimating disturbance torque using a nominal model and a filter. The correction process is a process of correcting the manipulated variable according to the disturbance torque estimated by the estimation process. The operation process is a process of operating a motor of the steering system so as to generate torque according to the manipulated variable corrected by the correction process. A degree of a polynomial in a denominator of a transfer function of the filter is higher than a degree of a polynomial in a denominator of a transfer function of the nominal model.

BRIEF DESCRIPTION OF THE DRAWINGS

[FIG. 1] FIG. 1 is a diagram showing the configuration of a steering control device and a steering system according to a first embodiment.

[FIG. 2] FIG. 2 is a block diagram showing processes that are performed by the steering control device of FIG. 1.

[FIG. 3] FIG. 3 is a diagram showing characteristics of a filter in FIG. 2 and characteristics of a filter of a comparative example.

[FIG. 4] FIG. 4 is a block diagram showing processes that are performed by a steering control device according to a second embodiment.

[FIG. 5] FIG. 5 is a diagram showing the configuration of a steering control device and a steering system according to a third embodiment.

[FIG. 6] FIG. 6 is a block diagram showing processes that are performed by the steering control device of FIG. 5.

MODES FOR CARRYING OUT THE INVENTION

<First Embodiment>

A first embodiment will be described below with reference to the drawings.

"Prerequisite Configuration"

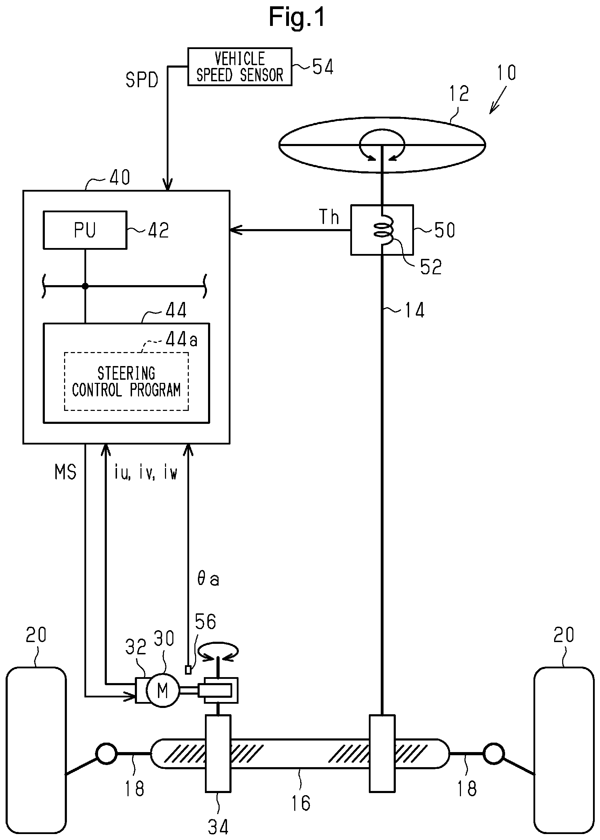

As shown in FIG. 1, a steering system 10 includes a steering wheel 12. The steering wheel 12 is a means for a driver to communicate his or her steering intentions. A transmission shaft 14 is connected to the steering wheel 12. Therefore, when the steering wheel 12 rotates, the transmission shaft 14 rotates with the steering wheel 12. The rotational power of the transmission shaft 14 is transmitted to a steered shaft 16. The steered shaft 16 extends in a vehicle width direction (left-right direction in FIG. 1). Steered wheels 20 are connected to both ends of the steered shaft 16 via tie rods 18.

The transmission shaft 14 is provided so as to intersect the steered shaft 16. The transmission shaft 14 and the steered shaft 16 have teeth that mesh with each other. These teeth mesh with each other, so that power can be transmitted from the transmission shaft 14 to the steered shaft 16. That is, the rotational power of the transmission shaft 14 is converted to axial displacement power of the steered shaft 16. Axial displacement of the steered shaft 16 is transmitted to the steered wheels 20 via the tie rods 18. A steered angle of the steered wheels 20 is thus changed. The steered angle refers to a turning angle of tires.

The steering system 10 further includes an assist motor 30. The assist motor 30 generates an assisting force that is a force for assisting the driver in steering. The rotational power of the assist motor 30 is applied to a drive shaft 34. The drive shaft 34 and the steered shaft 16 have teeth that mesh with each other. These teeth mesh with each other, so that power can be transmitted from the drive shaft 34 to the steered shaft 16. That is, the rotational power of the drive shaft 34 is converted to axial displacement power of the steered shaft 16. The rotational power of the assist motor 30 is thus converted to the axial displacement power of the steered shaft 16 via the drive shaft 34. Specifically, the assist motor 30 is, for example, a three-phase brushless motor. An output voltage of an inverter 32 is applied to a terminal of the assist motor 30.

A steering control device 40 controls a controlled variable of the steering system 10 that is a controlled object. The steering control device 40 refers to steering torque Th input to the steering wheel 12, in order to control the controlled variable. The steering torque Th is detected by a torque sensor 50. The torque sensor 50 is a sensor that detects the steering torque Th according to the degree of twist of a torsion bar 52 that is part of the transmission shaft 14. The steering control device 40 refers to a vehicle speed SPD detected by a vehicle speed sensor 54. The steering control device 40 refers to a rotation angle $\theta$a of the assist motor 30 detected by a rotation angle sensor 56. The steering control device 40 refers to currents iu, iv, and iw flowing through the assist motor 30.

The steering control device 40 includes a PU 42 and a storage device 44. The PU 42 is a software processing device such as a CPU, a GPU, and a TPU. The storage device 44 includes a storage medium such an electrically rewritable nonvolatile memory and a disk medium. The storage device 44 stores a steering control program 44a. The steering control device 40 controls the controlled variable by the PU 42 executing the steering control program 44a stored in the storage device 44.

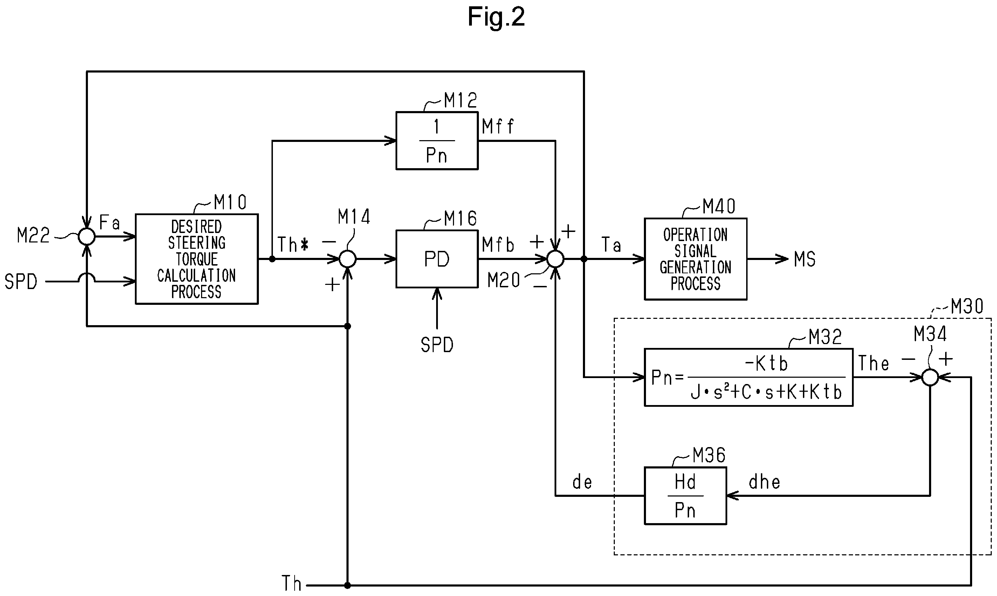

"Processes That Are Performed by Steering Control Device 40"
FIG. 2 shows processes that are performed by the steering control device 40. The processes shown in FIG. 2 are implemented by the PU 42 executing the steering control program 44a at, for example, predetermined cycles.

A desired steering torque calculation process M10 is a process of calculating desired steering torque Th*, namely a desired value of the steering torque Th, based on an axial force Fa. The axial force Fa is a force that is applied to the steered shaft 16. The axial force Fa is an amount converted to torque of the transmission shaft 14. The desired steering torque calculation process M10 includes a process of setting the desired steering torque Th* to a different value according to the vehicle speed SPD even when the axial force Fa is the same. This is a setting intended to give the driver an optimal steering feel according to the vehicle speed SPD.

An open-loop manipulated variable calculation process M12 is a process of calculating an open-loop manipulated variable Mff. The open-loop manipulated variable Mff is a manipulated variable of open-loop control that uses the steering torque Th as a controlled variable and uses the desired steering torque Th* as a desired value of the controlled variable. The open-loop manipulated variable calculation process M12 is a process of calculating the open-loop manipulated variable Mff by inputting the desired steering torque Th*. The open-loop manipulated variable calculation process M12 calculates the open-loop manipulated variable Mff based on an inverse model of a nominal model Pn. The nominal model Pn is a model that uses, as an input, assist torque Ta that is torque of the assist motor 30 and outputs estimated steering torque The that is an estimated value of the steering torque Th. The assist torque Ta herein refers to a value converted to the torque of the transmission shaft 14. The inverse model is a model that uses the estimated steering torque The as an input and that outputs the assist torque Ta. The nominal model Pn will be described in detail later.

A deviation calculation process M14 is a process of calculating a deviation that is a value obtained by subtracting the desired steering torque Th* from the steering torque Th.
A feedback manipulated variable calculation process M16 is a process of calculating a feedback manipulated variable Mfb using the deviation as an input. The feedback manipulated variable Mfb is a manipulated variable of feedback control that uses the steering torque Th as a controlled variable and uses the desired steering torque Th* as a desired value of the controlled variable. The feedback manipulated variable Mfb is the sum of an output value of a proportional element that uses the deviation as an input and an output value of a derivative element that uses the deviation as an input. The feedback manipulated variable Mfb is a value converted to the torque of the transmission shaft 14. Specifically, the feedback manipulated variable calculation process M16 includes a process of changing either or both of a gain of the proportional element and a gain of the derivative element according to the vehicle speed SPD.

A torque command value calculation process M20 is a process of calculating the assist torque Ta using the open-loop manipulated variable Mff, the feedback manipulated variable Mfb, and estimated second disturbance torque de as inputs. In the torque command value calculation process M20, a value obtained by subtracting the estimated second disturbance torque de from the sum of the open-loop manipulated variable Mff and the feedback manipulated variable Mfb is substituted for the assist torque Ta.

The assist torque Ta is input to an axial force calculation process M22. The axial force calculation process M22 is a process of substituting the sum of the assist torque Ta and the steering torque Th for the axial force Fa.
The assist torque Ta is input to a disturbance observer M30. The disturbance observer M30 includes a steering torque estimation process M32, a first disturbance calculation process M34, and a second disturbance calculation process M36.

The steering torque estimation process M32 is a process of outputting the estimated steering torque The by inputting the assist torque Ta to the nominal model Pn. The estimated steering torque The is steering torque estimated by the nominal model Pn.

The first disturbance calculation process M34 is a process of calculating estimated first disturbance torque dhe. The estimated first disturbance torque dhe is a disturbance component of the steering torque Th of an actual controlled object. The estimated first disturbance torque dhe is the difference of actual torque from the torque estimated from the nominal model Pn. In other words, the estimated first disturbance torque dhe is the difference between the steering torque estimated by the nominal model Pn and the actual steering torque Th. Specifically, the first disturbance calculation process M34 is a process of substituting a value obtained by subtracting the estimated steering torque The from the steering torque Th for the estimated first disturbance torque dhe.

The second disturbance calculation process M36 is a process of calculating the estimated second disturbance torque de using the estimated first disturbance torque dhe as an input. The estimated second disturbance torque de is disturbance torque converted to the torque of the assist motor 30. The second disturbance calculation process M36 is a process of calculating the estimated second disturbance torque de using the inverse model of the nominal model Pn and a filter Hd.

The filter Hd is provided to reduce noise caused by a differential operation included in the nominal model Pn. In the present embodiment, the filter Hd is, for example, a third-order low-pass filter.

As described above, the assist torque Ta is a value obtained by subtracting the estimated second disturbance torque de from the sum of the open-loop manipulated variable Mff and the feedback manipulated variable Mfb. On the other hand, the estimated second disturbance torque de is an amount obtained by converting the difference between the steering torque estimated by the nominal model Pn and the actual steering torque Th to the torque of the assist motor 30. This means that the estimated second disturbance torque de is an amount according to the difference between the steering torque estimated by the nominal model Pn and the actual steering torque Th. Therefore, the assist torque Ta is an amount obtained by correcting the sum of the open-loop manipulated variable Mff and the feedback manipulated variable Mfb with a correction amount according to the difference between the steering torque estimated by the nominal model Pn and the actual steering torque Th.

An operation signal generation process M40 is a process of operating the inverter 32 by inputting the assist torque Ta. Specifically, the operation signal generation process M40 includes a process of calculating a manipulated variable using the torque of the assist motor 30 as a controlled variable and using a value obtained by converting the assist torque Ta to the torque of the assist motor 30 as a desired value of the controlled variable. The operation signal generation process M40 includes a process of operating the inverter 32 so as to achieve the manipulated variable. The manipulated variable may be, for example, a ratio of on-time to one cycle of an on/off operation of a switching element of the inverter 32. An operation signal MS for the inverter 32 is shown in FIG. 2. However, the operation signal MS is actually an individual operation signal for each switching element of the inverter 32.

"Nominal Model Pn"

The steering torque Th is expressed by the following equation (c1) using an inertia coefficient Jh, a viscosity coefficient Ch, and a steering angle θh. The inertia coefficient Jh indicates inertia of a first portion that is a portion of the transmission shaft 14 located closer to the steering wheel 12 than the torsion bar 52. The viscosity coefficient Ch indicates viscosity of the first portion of the transmission shaft 14. The steering angle θh is a rotation angle of the steering wheel 12.

$$-Th = (Jh{\cdot}s{\cdot}s + Ch{\cdot}s){\cdot}\theta h \;...(c1)$$

On the other hand, the following equation (c2) is established using a rotation angle θl and a torsional stiffness coefficient Ktb of the torsion bar 52. The rotation angle θl is a rotation angle of a second portion that is a portion of the transmission shaft 14 located farther from the steering wheel 12 than the torsion bar 52.

$$Th = Ktb{\cdot}(\theta h - \theta l) \;...(c2)$$

The following equation (c3) is established among the rotation angle θl, the assist torque Ta, and the steering torque Th by using an inertia coefficient J, a viscosity coefficient C, and an elastic modulus K. The inertia coefficient J indicates inertia of the second portion of the transmission shaft 14. The viscosity coefficient C indicates viscosity of the second portion of the transmission shaft 14. The elastic modulus K indicates elasticity of the second portion of the transmission shaft 14. The influences that the steered shaft 16, the tie rods 18, the steered wheels 20, etc., have on the transmission shaft 14 are actually reflected on the viscosity coefficient C and the elastic modulus K.

$$Th + Ta = (J{\cdot}s{\cdot}s + C{\cdot}s + K){\cdot}\theta l \;...(c3)$$

If the steering torque Th is input so that the steering angle θh becomes zero, the steering angle θh is always zero. When a transfer function from the assist torque Ta to the steering torque Th is calculated based on the above equations (c1) to (c3) on the assumption that the steering angle θh is zero, the following equation (c4) is obtained.

$$Th/Ta = (-Ktb)/\{J{\cdot}s{\cdot}s + C{\cdot}s + K + Ktb\} \;...(c4)$$

A differential operator s is used in the above equation (c4). The above equation (c4) is the nominal model Pn. The above equation (c4) is also established when "θh" and "θl" in the above equations (c1) to (c3) read as follows.
θh: Phase difference of the rotation angle of the first portion of the transmission shaft 14 from the rotation angle of the steering wheel 12. This is always zero. θl: Phase difference of the rotation angle of the second portion of the transmission shaft 14 from the rotation angle of the steering wheel 12.
Therefore, the above equation (c4) holds for any steering angle θh.

"Regarding Filter Hd"

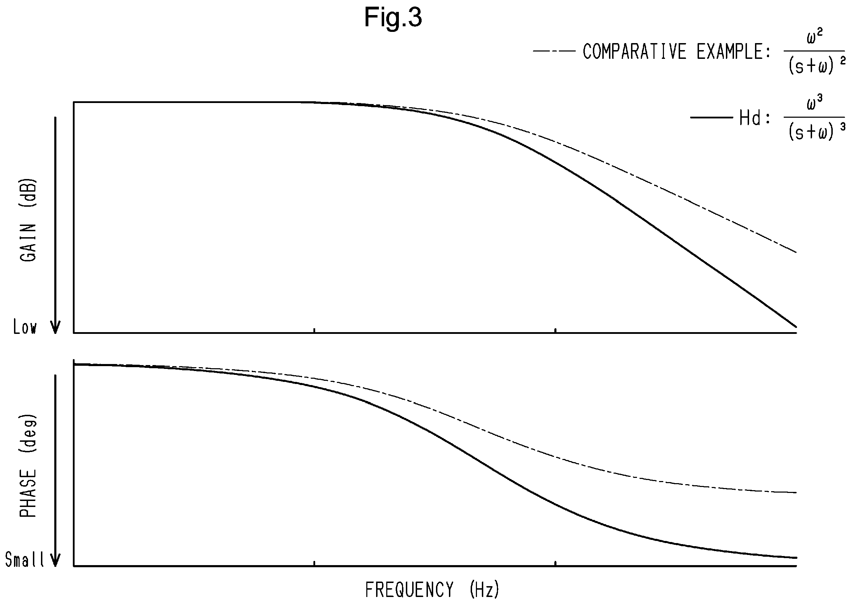

In the present embodiment, in a transfer function of the filter, the degree of a polynomial in the denominator is three, and the degree of a polynomial in the numerator is zero. Specifically, the transfer function of the filter is the cube of "ω/(s + ω)." A cutoff frequency ω and a differential operator s are used in the transfer function of the filter. The degree of a polynomial refers to the highest degree of a differential operator. In the following description, a monomial is considered to be a polynomial with all terms except one being zero.
The above settings of the transfer function of the filter are intended to effectively attenuate high-frequency noise.
That is, the filter Hd is intended to reduce high-frequency noise caused by a derivative element included in the inverse model of the nominal model Pn. Since the polynomial in the denominator of the transfer function of the nominal model Pn is quadratic, making the polynomial in the denominator of the transfer function of the filter Hd quadratic can reduce the influence of the derivative element.
However, as shown in FIG. 3, the third-order filter can attenuate a signal in a frequency range higher than the

cutoff frequency $\omega$ more than a second-order filter does. A third-order filter is therefore used in the present embodiment. The transfer function of the second-order filter of the comparative example in FIG. 3 is the square of "$\omega/(s+\omega)$."

<Functions and Effects of Embodiment>

The PU 42 calculates the estimated second disturbance torque de using, as an input, the estimated first disturbance torque dhe that is the difference between the steering torque Th and the estimated steering torque The. The estimated second disturbance torque de indicates a disturbance element of the torque of the second portion of the transmission shaft 14. In other words, it indicates a disturbance element of the torque that is converted to a force for displacing the steered shaft 16.

The PU 42 uses, as the assist torque Ta, a value obtained by correcting the open-loop manipulated variable Mff and the feedback manipulated variable Mfb with the estimated second disturbance torque de. The PU 42 operates the inverter 32 so that the torque of the assist motor 30 approaches the assist torque Ta. It is therefore possible to perform control that uses the desired steering torque Th* as a desired value of a controlled variable while compensating for a disturbance element such as an error between the nominal model Pn and the actual controlled object. In other words, the disturbance observer M30 can perform control that uses the desired steering torque Th* as a desired value of a controlled variable while compensating for an error of the nominal model Pn from the actual controlled object.

Since an amount equivalent to the error is thus quickly compensated for, response of the steering torque Th to the desired steering torque Th* can be improved. The workload required to design a controller can also be reduced compared to the case where the controller is designed according to the actual controlled object without using the disturbance observer M30.

The second disturbance calculation process M36 is a process of combining the inverse model of the nominal model Pn and the filter Hd. The polynomial in the denominator of the transfer function of the filter Hd is cubic. This allows high-frequency noise to be more effectively attenuated compared to the case where the polynomial in the denominator of the transfer function of the filter Hd is quadratic.

The above embodiment further has the following functions and effects. (1-1) In the processes shown in FIG. 2, the transfer function from the assist torque Ta to the steering torque Th is as follows when the actual controlled object is an actual plant P.

$$1/\{(1 - Hd)/P + Hd/Pn\}$$

In a frequency range lower than the cutoff frequency $\omega$, the gain of the filter Hd is close to "1" as shown in FIG. 3. Therefore, the transfer function from the assist torque Ta to the steering torque Th approximates to the nominal model Pn itself.

On the other hand, the PU 42 calculates the open-loop manipulated variable Mff by inputting the desired steering torque Th* to the inverse model of the nominal model Pn. Therefore, a transfer function from the desired steering torque Th* to the steering torque Th approximates to "1." In other words, a transfer function that uses the input of the open-loop manipulated variable calculation process M12 as an input, includes the disturbance observer M30 and the actual plant P, and outputs the steering torque Th approximates to "1." It is therefore possible to linearize from the desired steering torque Th* that is an input to the steering torque Th that is an output.

(1-2) The assist torque Ta includes the feedback manipulated variable Mfb. This allows to compensate for an error equivalent to the specified second disturbance torque de by the feedback manipulated variable Mfb. It is therefore possible to more accurately bring the steering torque Th closer to the desired steering torque Th*.

(1-3) The nominal model Pn is configured to include not only the inertia coefficient J but also the viscosity coefficient C, the elastic modulus K, and the torsional stiffness coefficient Ktb. This allows the nominal model Pn to be an accurate approximate model of the actual controlled object.

<Second Embodiment>

A second embodiment will be described below with reference to the drawings, focusing on the differences from the first embodiment.

In the present embodiment, the nominal model Pn is simplified.

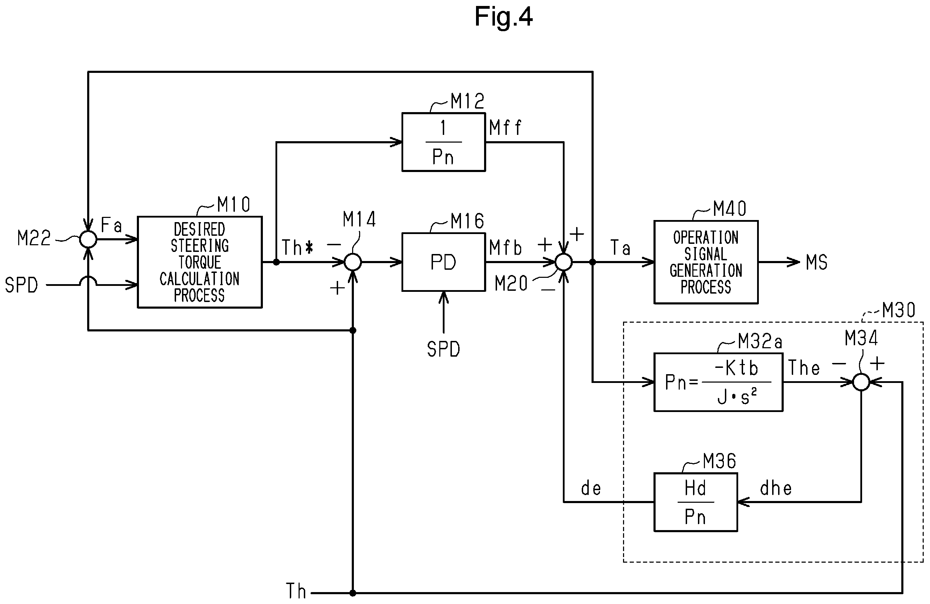

FIG. 4 shows processes that are performed by the steering control device 40 according to the present embodiment. Of the processes shown in FIG. 4, the processes corresponding to those shown in FIG. 2 are denoted by the same signs for convenience.

As shown in a steering torque estimation process M32a in FIG. 4, in the present embodiment, the nominal model Pn is expressed by the following expression (c5).

$$(-Ktb)/\{J \cdot s \cdot s\} \ldots (c5)$$

That is, the nominal model Pn does not have terms with the viscosity coefficient C and the elastic modulus K. The viscosity coefficient C and the elastic modulus K need to be estimated and determined from an actual vehicle. On the other hand, the inertia coefficient J is substantially determined by the inertia of the assist motor 30 and a damping ratio that is a ratio of the rotational speed of the transmission shaft 14 to the rotational speed of the assist motor 30 in the steering system 10. The torsional stiffness coefficient Ktb is determined by characteristics of the torsion bar 52 of the torque sensor 50. The workload required to design the nominal model Pn can thus be reduced by omitting the terms with the viscosity coefficient C and the elastic modulus K from the nominal model Pn.

<Third Embodiment>

A third embodiment will be described below with reference to the drawings, focusing on the differences from the first embodiment.

"Prerequisite Configuration"

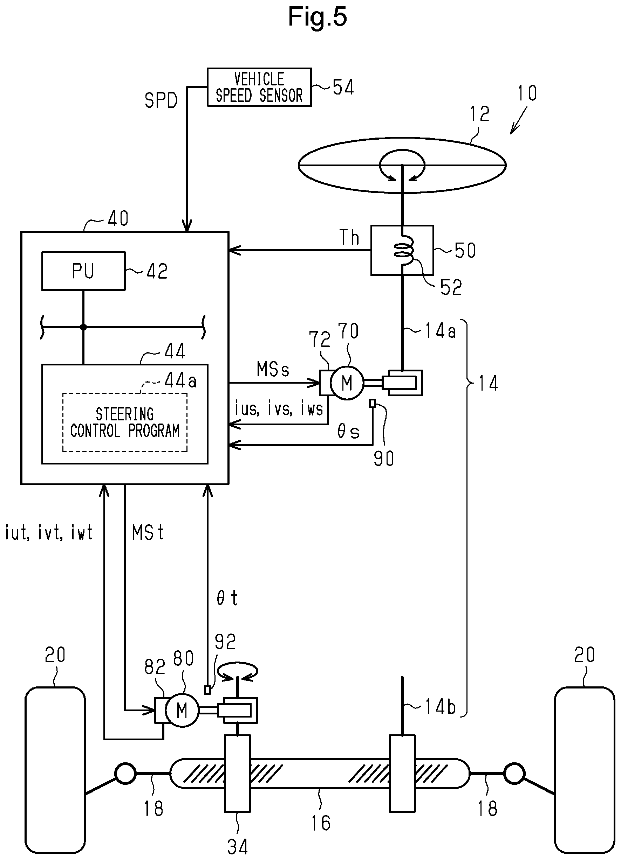

FIG. 5 shows the configuration of a steering control system according to the present embodiment. In FIG. 5, the members corresponding to those shown in FIG. 1 are denoted by the same signs for convenience.
As shown in FIG. 5, in the steering system 10, the transmission shaft 14 is divided into an input shaft 14a connected to the steering wheel 12 and an output shaft 14b engaged with the steered shaft 16. In the present embodiment, the output shaft 14b is actually not required. However, the output shaft 14b is provided for convenience of the following description.
A reaction motor 70 is provided for the input shaft 14a. The reaction motor 70 is a motor for applying a reaction force, namely torque in the opposite direction to that of torque input by the driver, to the steering wheel 12. The reaction motor 70 is, for example, a three-phase brushless motor. An output voltage of an inverter 72 is applied to a terminal of the reaction motor 70.
Torque of a steering motor 80 is applied to the steered shaft 16 via the drive shaft 34. The steering motor 80 is, for example, a three-phase brushless motor. An output voltage of an inverter 82 is applied to a terminal of the steering motor 80.
The steering system 10 is a controlled object of the steering control device 40. The steering control device 40 operates the inverter 72 in order to control the reaction force that is a controlled variable of the controlled object. The steering control device 40 operates the inverter 82 in order to control the steered angle of the steered wheels 20 that is a controlled variable of the controlled object.
The steering control device 40 refers to a rotation angle $\theta s$ of the reaction motor 70 detected by a rotation angle sensor 90, in order to control the reaction force that is a controlled variable. The steering control device 40 refers to currents ius, ivs, and iws flowing through the reaction motor 70, in order to control the reaction force. The steering control device 40 refers to a rotation angle $\theta t$ of the steering motor 80 detected by a rotation angle sensor 92, in order to control the steered angle that is a controlled variable. The steering control device 40 refers to currents iut, ivt, and iwt flowing through the steering motor 80, in order to control the steered angle.

"Processes That Are Performed by Steering Control Device 40"

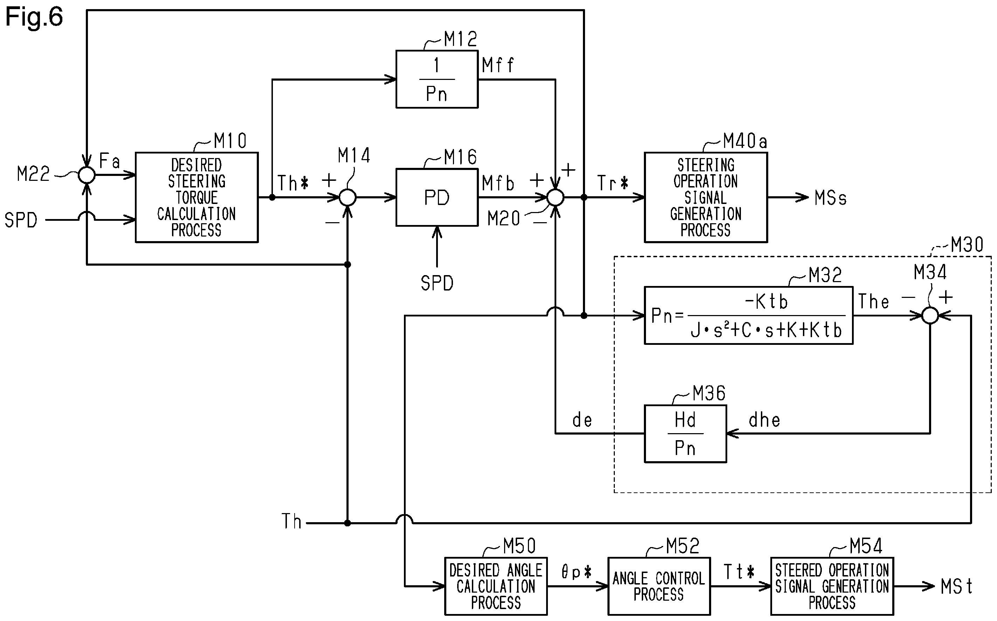

FIG. 6 shows processes that are performed by the steering control device 40. In other words, FIG. 6 shows processes that are performed by the steering control device 40 in a state in which transmission of the power of the steering wheel 12 to the steered wheels 20 is disconnected. In FIG. 6, the processes corresponding to those shown in FIG. 2 are denoted by the same signs for convenience.
As shown in FIG. 6, the deviation calculation process M14 is a process of calculating a value obtained by subtracting the steering torque Th from the desired steering torque Th*. The torque command value calculation process M20 is a process of outputting a reaction force command value Tr*. The torque command value calculation process M20 is a process of substituting a value obtained by subtracting the estimated second disturbance torque de from the sum of the open-loop manipulated variable Mff and the feedback manipulated variable Mfb for the reaction force command value Tr*. The reaction force command value Tr* is a command value for the reaction torque to be applied to the steering wheel 12. The reaction force command value Tr* is a value converted to the angle of the transmission shaft 14.
A steering operation signal generation process M40a is a process of operating the inverter 72 by inputting the reaction force command value Tr*. Specifically, the steering operation signal generation process M40a includes a process of calculating a manipulated variable of control that uses the torque of the reaction motor 70 as a controlled variable and uses a value obtained by converting the reaction force command value Tr* to the torque of the reaction motor 70 as a desired value of the controlled variable. The rotation angle θs and the currents ius, ivs, and iws are referred to when calculating the manipulated variable. The steering operation signal generation process M40a includes a process of operating the inverter 72 according to the manipulated variable. An operation signal MSs for the inverter 72 is shown in FIG. 5. However, the operation signal MSs is actually an individual operation signal for each switching element of the inverter 72.

A desired angle calculation process M50 is a process of calculating a desired angle θp* that is a desired value of a rotation angle of the drive shaft 34. The rotation angle of the drive shaft 34 has a one-to-one correspondence with the steered angle. The desired angle calculation process M50 may be a process of calculating the desired angle θp* from the reaction force command value Tr* using, for example, a model of the steering system 10. In this model, for example, the reaction force command value Tr* may be regarded as torque that is applied to the transmission shaft 14 on the assumption that the input shaft 14a and the output shaft 14b are mechanically connected.

An angle control process M52 is a process of calculating a manipulated variable for controlling the rotation angle of the drive shaft 34 to the desired angle θp*. This manipulated variable is a steered torque command value Tt* that is a torque command value for the steering motor 80.

A steered operation signal generation process M54 is a process of operating the inverter 82 by inputting the steered torque command value Tt*. The steered operation signal generation process M54 includes a process of calculating a manipulated variable of control that uses the torque of the steering motor 80 as a controlled variable and uses a value obtained by converting the steered torque command value Tt* to the torque of the steering motor 80 as a desired value of the controlled variable. The rotation angle θt and the currents iut, ivt, and iwt are referred to when calculating the manipulated variable. The steered operation signal generation process M54 includes a process of operating the inverter 82 according to the manipulated variable. An operation signal MSt for the inverter 82 is shown in FIG. 5. However, the operation signal MSt is actually an individual operation signal for each switching element of the inverter 82.

<Other Embodiments>

The above embodiments can be modified as follows. The above embodiments and the following modifications can be combined as long as no technical contradictions arise.

"Regarding Desired Steering Torque Calculation Process M10" - The desired steering torque calculation process M10 need not necessarily calculate the desired steering torque Th* based on the axial force Fa. For example, the desired steering torque calculation process M10 may be a process of calculating the desired steering torque Th* using the steering torque Th and the assist torque Ta as inputs.

- The desired steering torque calculation process M10 need not necessarily use the vehicle speed SPD as an input.

  - The inputs to the desired steering torque calculation process M10 are not limited to those described above. For example, two or more sampled values of the steering angle sampled at different timings may be input to the desired steering torque calculation process M10. In this case, a process of identifying when the steering wheel 12 is turned and when the steering wheel 12 is turned back can be implemented according to the inputs. Therefore, for example, an absolute value of the desired steering torque Th* may be set to a larger value when the steering wheel is turned than when the steering wheel is turned back.

"Regarding Open-Loop Manipulated Variable Calculation Process"

- The open-loop manipulated variable calculation process M12 is not limited to the process that uses the desired steering torque Th* as an input. For example, the open-loop manipulated variable calculation process M12 may be a process that uses the axial force Fa as an input. In this case, the transfer function of the open-loop manipulated variable calculation process M12 may be a product of a transfer function that calculates the desired steering torque Th* from the axial force Fa and the inverse model of the nominal model Pn.

"Regarding Feedback Manipulated Variable Calculation Process"

- The feedback manipulated variable Mfb need not necessarily be the sum of an output value of a proportional element that uses the deviation as an input and an output value of a derivative element that uses the deviation as an input. For example, the feedback manipulated variable Mfb may be the sum of an output value of a proportional element that uses the deviation as an input, an output value of a derivative element that uses the deviation as an input, and an output value of an integral element that uses a value according to the deviation as an input. Alternatively, for example, the feedback manipulated variable Mfb may be the sum of an output value of a proportional element that uses the deviation as an input and an output value of an integral element that uses a value according to the deviation as an input. In this case, the gain of the integral element may be made variable according to the vehicle speed SPD.

The derivative element is not limited to the element to which the deviation is input. For example, the derivative element may be an element that uses the steering torque Th as an input. In other words, the derivative element may form a PI-D controller.

- The process of making at least one of the gains of the elements of the feedback manipulated variable calculation process variable according to the vehicle speed SPD is not necessarily required.

"Regarding Manipulated Variable Calculation Process"

- For example, the manipulated variable calculation process need not necessarily include the feedback manipulated variable calculation process, and may consist only of the open-loop manipulated variable calculation process. Alternatively, for example, the manipulated variable calculation process need not necessarily include the open-loop manipulated variable calculation process, and may consist only of the feedback manipulated variable calculation process.

"Regarding Nominal Model Pn"

- The nominal model Pn is not limited to the models shown in the above embodiments. For example, a model expressed by the following expression (c6) may be used instead of the nominal model Pn used in the steering torque estimation process M32a.

$$(-Ktb)/\{J \cdot s \cdot s + Ktb\} \dots (c6)$$

That is, the polynomial in the denominator of the transfer function of the nominal model Pn may include a zeroth-order term. In other words, the denominator of the transfer function of the nominal model Pn may include a zeroth-order term of the differential operator.

The degree of the polynomial in the denominator of the transfer function of the nominal model Pn need not necessarily be two.

"Regarding Filter Hd"

- The filter Hd is not limited to such a filter that the polynomial in the denominator of its transfer function is cubic. For example, the polynomial in the denominator of the transfer function of the filter Hd may be quartic or higher degree. For example, when the degree of the polynomial in the denominator of the transfer function of the nominal model Pn is one, the degree of the polynomial in the denominator of the transfer function of the filter Hd may be two or higher.

"Regarding Correction Process"

- The correction process is not limited to the process including the steering torque estimation process M32, the first disturbance calculation process M34, the second disturbance calculation process M36, and the torque command value calculation process M20. For example, firstly, estimated motor torque Tae may be calculated using the steering torque Th as an input to a combining process of combining the inverse model of the nominal model Pn with the filter Hd.

In this case, secondly, a difference calculation process of calculating the difference between the sum of the open-loop manipulated variable Mff and the feedback manipulated variable Mfb and the estimated motor torque Tae may be performed. Thirdly, the torque command value calculation process M20 may perform a process of correcting the sum of the open-loop manipulated variable Mff and the feedback manipulated variable Mfb using an output of the difference calculation process. In this case, the correction process is composed of the combination process, the difference calculation process, and the torque command value calculation process M20. The output of the difference calculation process described above is an amount according to the difference between the steering torque estimated by the nominal model Pn and the actual steering torque Th.

"Regarding Operation Process"

- In the processes shown in FIG. 2, the operation process is a process that uses the torque of the assist motor 30 as a controlled variable and uses a value obtained by converting the assist torque Ta to the torque of the assist motor 30 as a desired value of the controlled variable. However, the present disclosure is not limited to this. For example, the operation process may include a process of calculating a desired value of the rotation angle of the assist motor 30 from the axial force Fa. In this case, the operation process is a process of operating the assist motor 30 according to a manipulated variable of feedback control that uses the rotation angle of the assist motor 30 as a controlled variable. The axial force Fa is the sum of the steering torque Th and a value obtained by correcting a manipulated variable determined from the open-loop manipulated variable Mff and the feedback manipulated variable Mfb with the estimated second disturbance torque de. Therefore, the operation process is a process of operating the inverter 32 according to the value obtained by correcting the manipulated variable determined from the open-loop manipulated variable Mff and the feedback manipulated variable Mfb with the estimated second disturbance torque de. This is a process of controlling the torque of the assist motor 30 so as to generate torque according to the value obtained by correcting the manipulated variable determined from the open-loop manipulated variable Mff and the feedback manipulated variable Mfb with the estimated second disturbance torque de.

The embodiment to which the modification including feedback control of the angle can be applied is not limited to the embodiment shown in FIG. 2. For example, this may be applied to the embodiments shown in FIGS. 3 and 6. "Regarding Steering Control Device"

- In the configuration shown in FIG. 5, the device that operates the reaction motor 70 and the device that operates the steering motor 80 may be separate devices.

  - The steering control device is not limited to the control device that includes the PU 42 and the storage device 44 and that performs software processing. For example, the steering control device may include a dedicated hardware circuit such as an ASIC that performs at least part of the processes performed in the above embodiments. That is, the steering control device may include a processing circuit with any of the following configurations (a) to (c).

    (a) A processing circuit including: a processing device that performs all of the above processes according to a program; and a program storage device such as a storage device that stores the program.
    (b) A processing circuit including: a processing device that performs part of the above processes according to a program; a program storage device; and a dedicated hardware circuit that performs the rest of the processes.
    (c) A processing circuit including a dedicated hardware circuit that performs all of the above processes.

The number of software execution devices including a processing device and a program storage device may be two or more. The number of dedicated hardware circuits may be two or more.

"Regarding Steering Control Method"

- The entity that performs the various controls described above is not limited to the steering control device mounted on a vehicle. For example, part of the processes for control to the desired steering torque Th*, such as the disturbance observer M30, may be performed by a mobile terminal of the driver.

"Regarding Input Unit"

- An input unit to which the steering torque is input is not limited to the steering wheel 12. "Regarding State in Which Power Transmission Is Disconnected"
- The configuration that implements the state in which power transmission between the input unit to which the steering torque is input and the steered wheels 20 is disconnected is not limited to the configuration shown in FIG. 5. For example, a clutch may be provided between the input shaft 14a and the output shaft 14b.

"Regarding Steering System"

- For example, an actuator with the assist motor 30 or the steering motor 80 disposed coaxially with the steered shaft 16 may be used as an actuator that steers the steered wheels 20. Alternatively, for example, an actuator that transmits the power of the assist motor 30 or the steering motor 80 to the steered shaft 16 via a belt speed reducer using a ball screw mechanism may be used.

    - The steering system that can change the relationship between the steering angle and the steered angle is not limited to the steering system in which power transmission between the steering wheel 12 and the steered wheels 20 is disconnected as shown in FIG. 5. For example, the steering system may be configured to change the relationship between the steering angle and the steered angle by using a variable gear as a gear that allows power transmission between the steering wheel 12 and the steered wheels 20.

**Claims**

1. A steering control device configured to perform a manipulated variable calculation process, an estimation process, a correction process, and an operation process, wherein:

    the manipulated variable calculation process is a process of calculating a manipulated variable of control that uses steering torque as a controlled variable and uses desired steering torque as a desired value of the controlled variable;
    the steering torque is torque that a driver inputs to a steering system;
    the desired steering torque is a desired value of the steering torque;
    the estimation process is a process of estimating disturbance torque using a nominal model and a filter;
    the correction process is a process of correcting the manipulated variable according to the disturbance torque estimated by the estimation process;
    the operation process is a process of operating a motor of the steering system so as to generate torque according to the manipulated variable corrected by the correction process; and
    a degree of a polynomial in a denominator of a transfer function of the filter is higher than a degree of a polynomial in a denominator of a transfer function of the nominal model.

2. The steering control device according to claim 1, wherein:

    the degree of the polynomial in the denominator of the transfer function of the nominal model is two; and
    the degree of the polynomial in the denominator of the transfer function of the filter is three or higher.

3. The steering control device according to claim 2, wherein the degree of the polynomial in the denominator of the transfer function of the filter is three.

4. The steering control device according to claim 2, wherein the polynomial in the denominator of the transfer function of the nominal model includes a first-order term and a zeroth-order term.

5. The steering control device according to claim 2, wherein the polynomial in the denominator of the transfer function of the nominal model does not include a first-order term.

**6.** The steering control device according to claim 1, wherein:

the manipulated variable calculation process includes an open-loop manipulated variable calculation process;
the open-loop manipulated variable calculation process includes a process of calculating an open-loop manipulated variable by inputting the desired steering torque to an inverse model of the nominal model; and
the open-loop manipulated variable is a manipulated variable of open-loop control that uses the steering torque as the controlled variable and uses the desired steering torque as the desired value of the controlled variable.

**7.** The steering control device according to claim 1, wherein:

the manipulated variable calculation process includes a feedback manipulated variable calculation process;
the feedback manipulated variable calculation process is a process of calculating a feedback manipulated variable; and
the feedback manipulated variable is a manipulated variable of feedback control that uses the steering torque as the controlled variable and uses the desired steering torque as the desired value of the controlled variable.

**8.** The steering control device according to claim 1, wherein the motor is a motor configured to steer a steered wheel of a vehicle.

**9.** The steering control device according to claim 1, wherein the motor is a motor configured to apply torque to an input unit for the steering torque in a state in which power transmission between a steered wheel of a vehicle and the input unit is disconnected.

**10.** A steering control method comprising a step of performing a manipulated variable calculation process, an estimation process, a correction process, and an operation process, wherein:

the manipulated variable calculation process is a process of calculating a manipulated variable of control that uses steering torque as a controlled variable and uses desired steering torque as a desired value of the controlled variable;
the steering torque is torque that a driver inputs to a steering system;
the desired steering torque is a desired value of the steering torque;
the estimation process is a process of estimating disturbance torque using a nominal model and a filter;
the correction process is a process of correcting the manipulated variable according to the disturbance torque estimated by the estimation process;
the operation process is a process of operating a motor of the steering system so as to generate torque according to the manipulated variable corrected by the correction process; and
a degree of a polynomial in a denominator of a transfer function of the filter is higher than a degree of a polynomial in a denominator of a transfer function of the nominal model.

# Fig.1

Fig.2

Fig.3

COMPARATIVE EXAMPLE: $\dfrac{\omega^2}{(s+\omega)^2}$

Hd: $\dfrac{\omega^3}{(s+\omega)^3}$

GAIN (dB) — Low

PHASE (deg) — Small

FREQUENCY (Hz)

Fig.4

EP 4 582 332 A1

# Fig.5

Fig.6

## INTERNATIONAL SEARCH REPORT

| International application No. |
| --- |
| **PCT/JP2022/032754** |

| A. | CLASSIFICATION OF SUBJECT MATTER |
| --- | --- |

**B62D 6/00**(2006.01)i; **B62D 5/04**(2006.01)i; **G05B 11/32**(2006.01)i; **G05B 11/36**(2006.01)i; **H02P 27/08**(2006.01)i
FI: B62D6/00; B62D5/04; G05B11/32 F; G05B11/36 G; H02P27/08

According to International Patent Classification (IPC) or to both national classification and IPC

| B. | FIELDS SEARCHED |
| --- | --- |

Minimum documentation searched (classification system followed by classification symbols)

B62D6/00; B62D5/04; G05B11/32; G05B11/36; H02P27/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2021-138334 A (JTEKT CORP) 16 September 2021 (2021-09-16) paragraphs [0017]-[0076], fig. 1-8 | 1-10 |
| A | JP 2021-138335 A (JTEKT CORP) 16 September 2021 (2021-09-16) paragraphs [0017]-[0055], fig. 1-5 | 1-10 |
| A | US 2019/0317516 A1 (OHIO UNIVERSITY) 17 October 2019 (2019-10-17) paragraphs [0051]-[0127], fig. 1-32 | 1-10 |
| A | JP 08-072735 A (NISSAN MOTOR CO LTD) 19 March 1996 (1996-03-19) paragraphs [0030]-[0098], fig. 1-7 | 1-10 |
| A | JP 2009-022149 A (DENSO CORP) 29 January 2009 (2009-01-29) paragraphs [0022]-[0062], fig. 1-6 | 1-10 |
| A | JP 2019-151180 A (UNIV GUNMA) 12 September 2019 (2019-09-12) paragraphs [0028]-[0125], fig. 1-11 | 1-10 |
| A | DE 102010030986 A1 (ZF LENKSYSTEME GMBH) 12 January 2012 (2012-01-12) paragraphs [0033]-[0063], fig. 1-3 | 1-10 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 October 2022** | **15 November 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/032754**

| Patent document cited in search report | | | Publication date (day/month/year) | Patent family member(s) | | | Publication date (day/month/year) |
|---|---|---|---|---|---|---|---|
| JP | 2021-138334 | A | 16 September 2021 | (Family: none) | | | |
| JP | 2021-138335 | A | 16 September 2021 | EP | 3878715 | A1 | |
| | | | | CN | 113371060 | A | |
| | | | | US | 2021/0276616 | A1 | |
| | | | | paragraphs [0022]-[0059], fig. 1-5 | | | |
| US | 2019/0317516 | A1 | 17 October 2019 | WO | 2018/089898 | A2 | |
| | | | | CN | 110235071 | A | |
| JP | 08-072735 | A | 19 March 1996 | (Family: none) | | | |
| JP | 2009-022149 | A | 29 January 2009 | (Family: none) | | | |
| JP | 2019-151180 | A | 12 September 2019 | (Family: none) | | | |
| DE | 102010030986 | A1 | 12 January 2012 | WO | 2012/004331 | A1 | |
| | | | | EP | 2590850 | A1 | |
| | | | | ES | 2600906 | T3 | |
| | | | | CN | 102971201 | A | |
| | | | | US | 2012/0046836 | A1 | |
| | | | | paragraphs [0054]-[0098], fig. 1-3 | | | |

Form PCT/ISA/210 (patent family annex) (January 2015)

**EP 4 582 332 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004203089 A